# EUROPEAN PATENT SPECIFICATION

(11) **EP 3 782 910 B1**
(45) Date of publication and mention of the grant of the patent: **24.01.2024**
(21) Application number: 19212884.1
(22) Date of filing: 02.12.2019
(51) Int. Cl.: B64D 13/04, B64D 13/06

(54) **AIR CONDITIONING SYSTEM WITH INTEGRATED CABIN PRESSURE CONTROL**
KLIMAANLAGE MIT INTEGRIERTER KABINENDRUCKREGELUNG
SYSTÈME DE CONDITIONNEMENT D'AIR À COMMANDE DE PRESSION DE CABINE INTÉGRÉE

(30) Priority: 20.08.2019 US 201916545686
(43) Date of publication of application: 24.02.2021
(73) Proprietor: Hamilton Sundstrand Corporation, Charlotte, NC 28217-4578 (US)
(72) Inventor: BRUNO, Louis J., Ellington, CT 06029 (US); HO, Tony, Glastonbury, CT 06033 (US); COUTIN, Aiden, South Windsor, CT 06074 (US)
(74) Representative: Dehns

(56) References cited:
- EP-A1- 2 947 012
- EP-A1- 3 354 574
- EP-A2- 0 738 655
- GB-A- 630 267
- US-A- 5 137 230
- US-A1- 2016 312 648
- US-A1- 2017 341 758
- US-A1- 2017 341 759
- US-A1- 2017 342 838

## Description

### BACKGROUND

Embodiments of the disclosure relate to environmental control systems, and more specifically to the cabin air conditioning system and a cabin pressure control system of an aircraft.

Aircraft are equipped with an environmental control system (ECS), which typically includes a plurality of subsystems. One of these subsystems is an air conditioning system (ACS) operable to dehumidify and control the temperature of the air that is supplied to the cabin. The air conditioning system typically includes one or more air conditioning packs containing valves, heat exchangers, turbomachinery, sensors, and a controller. The air conditioning packs typically receive high pressure high temperature air from an engine or from an auxiliary power unit and reject heat to ambient and extract energy from the air to cool and dehumidify the air.

Aircraft are also commonly equipped with a cabin pressure control system (CPCS), which is operable to maintain a cabin air pressure within a desired range to increase passenger comfort during flight. A typical CPCS includes a controller, an actuator, and an outflow valve. The outflow valve is typically mounted either on a bulkhead of the aircraft or on the outer skin surface of the aircraft, and is selectively operated to fluidly couple the aircraft cabin and the atmosphere outside of the aircraft. The CPCS may additionally include a safety valve use to prevent over pressurization of the cabin.

During operation of the CPCS, the controller commands the actuator to move the outflow valve to various positions to control the rate at which pressurized air is transferred from between the aircraft cabin and the outside atmosphere, to thereby control the pressure and/or rate of change of pressure within the aircraft cabin. The controller may be configured to command the actuator to modulate the outflow valve in accordance with a predetermined schedule or as a function of one or more operational criteria. For example, the CPCS may additionally include one or more cabin pressure sensors to sense cabin pressure and supply pressure signals representative thereof to the controller. By actively modulating the outflow valve, the controller may maintain aircraft cabin pressure and/or aircraft cabin pressure rate of change within a desired range.

In existing aircraft, the components and the control functionality of the ACS and the CPCS are separate and located in different locations of an aircraft. In some configurations, the ACS receives a flow from the cabin that would have otherwise been exhausted outside of the aircraft. However, the cabin outflow air provided to the ACS is not controlled based on the pressure of the cabin. As a result, inefficiencies in the aircraft exist. EP 2947012 A1 discloses an air conditioning system comprising a process air line adapted to supply compressed process air provided by a process air source to an air conditioning unit and to a trim air line branching off from the process air line upstream of the air conditioning unit. US 2017/0341758 A1 and US 2017/0341759 A1 relate to an environmental control system of an aircraft that mixes mediums from different sources and uses the different energy sources to power the environmental control system.

### BRIEF DESCRIPTION

According to one embodiment, an environmental control system for providing a conditioned medium to one or more loads of an aircraft is provided as claimed in claim 1.

In addition to one or more of the features described above, in further embodiments the first medium is one of bleed air and outside air.

In addition to one or more of the features described above, in further embodiments source of first medium includes at least one of an engine and an auxiliary power unit of the aircraft.

In addition to one or more of the features described above, in further embodiments the second medium is cabin outflow air.

In addition to one or more of the features described above, in further embodiments the turbine is a power turbine.

In addition to one or more of the features described above, in further embodiments the turbine is a dual entry turbine.

In addition to one or more of the features described above, in further embodiments the turbine includes a nozzle configured to accelerate a flow or medium into the turbine, wherein a diameter of an opening defined by the nozzle is fixed.

In addition to one or more of the features described above, in further embodiments the turbine includes a nozzle configured to accelerate a flow or medium into the turbine, wherein a diameter of an opening defined by the nozzle is variable.

In addition to one or more of the features described above, in further embodiments the diameter of the nozzle is varied in response to the pressure of the second medium.

In addition to one or more of the features described above, in further embodiments the at least one valve includes a first valve operable to control a flow from the pressurized volume and a second valve operable to exhaust a portion of the second medium outside the aircraft, the first valve and the second valve are independently operable.

In addition to one or more of the features described above, in further embodiments the second valve is operable to control a flow from the pressurized volume, the first valve and the second valve being independently operable.

In addition to one or more of the features described above, in further embodiments comprising a ram air circuit including a ram air duct having at least one heat exchanger positioned therein.

In addition to one or more of the features described above, in further embodiments comprising a heat exchanger arranged in fluid communication with the second medium.

In addition to one or more of the features described above, in further embodiments the heat exchanger is arranged upstream from the turbine relative to a flow of the second medium.

According to another embodiment, a method of operating an environmental control system of an aircraft is provided as claimed in claim 11.

In addition to one or more of the features described above, in further embodiments comprising extracting energy from the second medium via the turbine, wherein the energy is used to compress the first medium.

In addition to one or more of the features described above, in further embodiments controlling the flow of the second medium to the air conditioning system to maintain the minimum pressure within the pressurized volume includes controlling the flow of the second medium to the turbine.

In addition to one or more of the features described above, in further embodiments controlling the flow of the second medium to the air conditioning system to maintain the minimum pressure within the pressurized volume includes controlling the flow of the second medium exhausted from the environmental control system to outside the aircraft.

In addition to one or more of the features described above, in further embodiments comprising cooling the first medium by arranging the first medium and the second medium in a heat transfer relationship.

In addition to one or more of the features described above, in further embodiments the first medium is one of bleed air and outside air and the second medium is cabin outflow air.

Additional features and advantages are realized through the techniques of the embodiments herein. Other embodiments are described in detail herein and are considered a part of the claims. For a better understanding of the embodiments with the advantages and the features, refer to the description and to the drawings.

### BRIEF DESCRIPTION OF THE DRAWINGS

The subject matter is particularly pointed out and distinctly claimed in the claims at the conclusion of the specification. The foregoing and other features, and advantages thereof are apparent from the following detailed description taken in conjunction with the accompanying drawings in which:
FIG. 1 is a schematic diagram of an example air conditioning pack not according to the claimed invention;
FIG. 2 is a schematic diagram of another example air conditioning pack not according to the claimed invention;
FIG. 3 is a schematic diagram of yet another example air conditioning pack not according to the claimed invention;
FIG. 4 is a schematic diagram of the interface between a pressurized volume and a portion of the ECS;
FIG. 5 is a schematic diagram of the interface between a pressurized volume and a portion of the ECS;
FIG. 6 is a schematic diagram of the interface between a pressurized volume and a portion of the ECS
FIG. 7 is a schematic diagram of the interface between a pressurized volume and a portion of the ECS;
FIG. 8 is a schematic diagram of the interface between a pressurized volume and a portion of the ECS not according to the claimed invention;
FIG. 9 is a schematic diagram of an environmental control system including an interface for receiving cabin outflow air from a pressurized volume according to an embodiment;
FIG. 10 is a schematic diagram of another environmental control system including an interface for receiving cabin outflow air from a pressurized volume according to an embodiment; and
FIG. 11 is a schematic diagram of another environmental control system including an interface for receiving cabin outflow air from a pressurized volume according to an embodiment.

### DETAILED DESCRIPTION

A detailed description of one or more embodiments of the disclosed apparatus and method are presented herein by way of exemplification and not limitation with reference to the FIGS.

Embodiments herein provide an air conditioning system (ACS) of an aircraft that receives multiple mediums from different sources and uses energy from one or more of the mediums to operate the air conditioning system and to provide cabin pressurization and cooling at a high fuel burn efficiency. The mediums described herein are generally types of air; however, it should be understood that other mediums, such as gases, liquids, fluidized solids, or slurries are also contemplated herein.

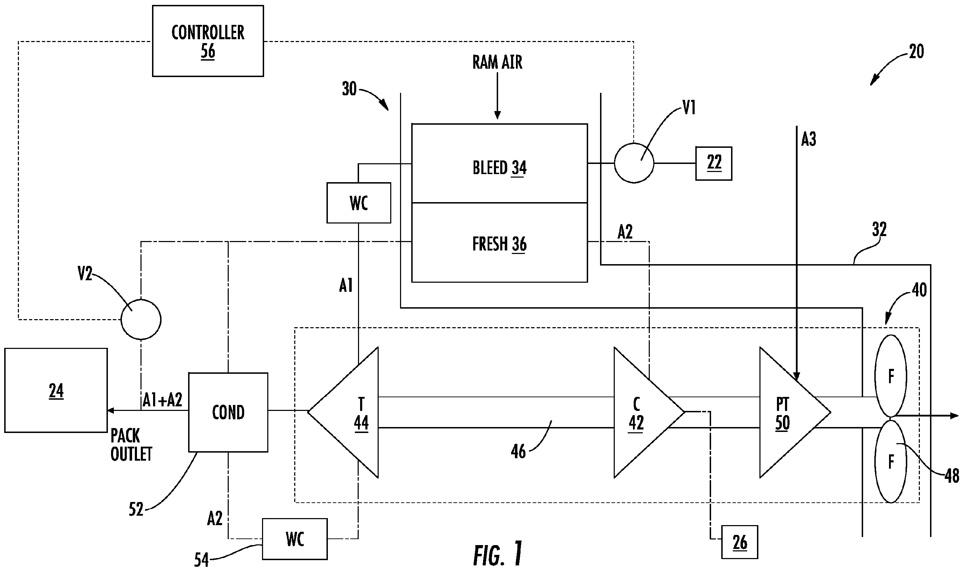

With reference now to the FIGS. 1-3, schematic diagrams of a portion of a subsystem of an environment control system (ECS), such as an air conditioning system (ACS) 20 not according to the claimed invention are depicted. In each of the embodiments, the illustrated pack of the air condition system ACS 20 is configured to receive one or more mediums and provide a conditioned medium to one or more loads of the aircraft. As shown in each of the FIGS., the ACS 20 can receive a first medium A1 at a first inlet 22 from a source of first medium and provide a conditioned form of the first medium A1 to one or more downstream loads including a pressurized volume 24, such as the cabin of the aircraft for example.

In one embodiment, not according to the claimed invention, as shown in FIGS, 1 and 3, the first medium A1 is bleed air. As used herein, the term "bleed air" includes pressurized air originating from or being "bled" from, an engine or auxiliary power unit of the aircraft. It shall be understood that one or more of the temperature, humidity, and pressure of the bleed air may vary based upon the compressor stage and revolutions per minute of the engine or auxiliary power unit from which the air is drawn. For example, bleed air may be drawn from either a low pressure compressor spool or a high pressure compressor spool of an engine, and bleed air drawn from the low pressure compressor spool will have a relatively lower pressure than bleed air drawn from the high pressure compressor spool. In some embodiments, the ACS 20 is configured to extract work from the first medium A1. In this manner, the pressurized air A1 can be utilized by the ACS 20 to achieve certain operations.

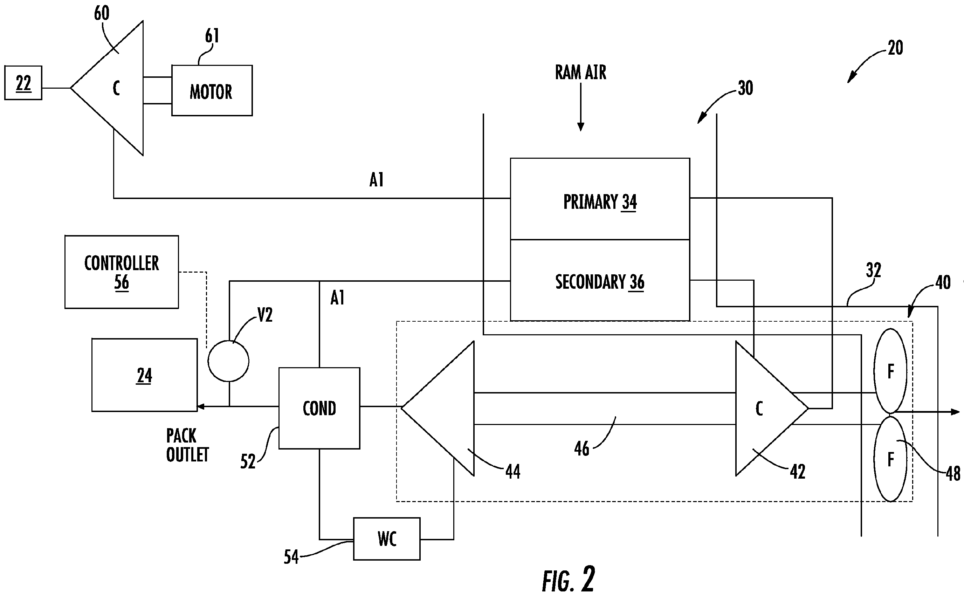

In another embodiment, not according to the claimed invention, best shown in FIG. 2, the first medium A1 is fresh or outside ambient air. The outside air may be procured via one or more scooping mechanisms, such as an impact scoop or a flush scoop and may or may not be part of the ram inlet. Generally, the fresh air described herein is at an ambient pressure and temperature outside of the aircraft with respect to altitude.

With reference again to FIG. 1, in some embodiments, the ACS 20 is also configured to receive a second medium A2 at a second inlet 26. In embodiments where the first medium A1 is bleed air, the second medium A2 may be fresh or outside ambient air. In such embodiments, the second inlet 26 can be considered a fresh air inlet or an outside air inlet.

With reference again to FIGS. 1-3, the ACS 20 typically includes one or more heat exchangers. The one or more heat exchangers are devices built for efficient heat transfer from one medium to another. Examples of the type of heat exchangers that may be used, include, but are not limited to, double pipe, shell and tube, plate, plate and shell, adiabatic shell, plate fin, pillow plate, and fluid heat exchangers. In an embodiment, the one or more heat exchangers may be located within the ram air duct 32 of a RAM air circuit 30, such that the one or more heat exchangers may be referred to as "ram heat exchangers." Within the one or more heat exchangers, a cooling fluid, such as outside air, also referred to herein as "RAM air" drawn in through a scoop for example, acts as a heat sink to cool a medium passing there through, such as the first medium A1 and/or the second medium A2 for example. In each of the illustrated, non-limiting embodiments, the one or more heat exchangers includes a first heat exchanger 34 and a second heat exchanger 36. The first and second heat exchangers 34, 36 may be arranged in series relative to the flow of cooling medium. Although a first and second heat exchanger 34, 36 are illustrated and described herein, it should be understood that embodiments including only a single heat exchanger, or alternatively, embodiments including more than two heat exchangers in series or in parallel are also within the scope of the disclosure.

The ACS 20 additionally comprises at least one compressing device 40. In the illustrated, embodiment, not according to the claimed invention, the compressing device 40 of the ACS 20 is a mechanical device that includes components for performing thermodynamic work on a medium (e.g., extracts work from or applies work to the first medium A1 and/or the second medium A2 by raising and/or lowering pressure and by raising and/or lowering temperature.) Examples of the compressing device 40 include an air cycle machine, a three-wheel air cycle machine, a four-wheel air cycle machine, etc...

As shown, the compressing device 40 includes a compressor 42 and a turbine 44, operably coupled to each other via a shaft 46. Further in some embodiments, not according to the claimed invention, for example, as shown in FIG. 1, the compressing device 40 may additionally include a power turbine 50, separate from the turbine 44.

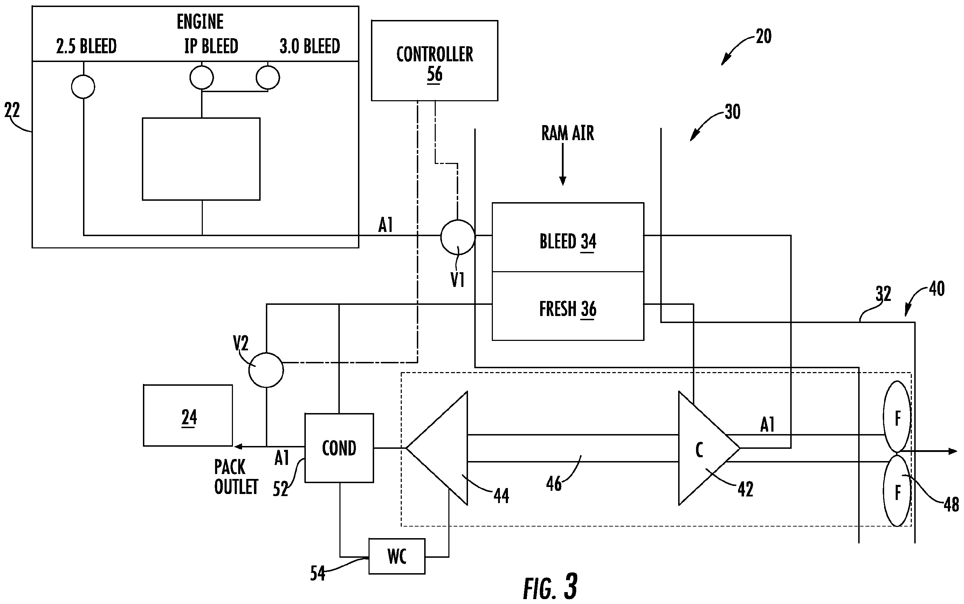

The compressor 42 is a mechanical device that raises a pressure of a medium provided thereto and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. As shown, the compressor 42 is configured to receive and pressurize a medium, such as the second medium A2 in FIG. 1, and the first medium A1 in FIGS. 2 and 3.

The turbine 44 and the power turbine 50 are mechanical devices that expand a medium and extract work therefrom (also referred to as extracting energy). The turbine 44, and in some embodiments the power turbine 50, drive the compressor 42 and the fan 48 via the shaft 46. Either the turbine 44 or the power turbine 50 may be a dual entry turbine that includes multiple inlet fluid flow paths, such as an inner flow path and an outer flow path. For example, the inner flow path may be a first diameter and the outer flow path may be a second diameter. Further, the dual entry turbine may include a first nozzle configured to accelerate a first medium for entry into a turbine impeller and a second nozzle configured to accelerate a second medium for entry into the turbine impeller. However, embodiments where the turbine 44 and/or the power turbine 50 are configured to receive a single pressurized fluid flow are also within the scope of the disclosure.

A fan 48 is a mechanical device that can force, via push or pull methods, a medium (e.g., ram air) across the one or more heat exchangers and at a variable cooling to control temperatures. Although the fan is illustrated and described herein as being a part of the compressing device, in other embodiments, the fan may be separate from the compressing device, and therefrom driven by another power source, such as an electric motor for example.

The ACS 20 additionally includes a dehumidification system. In the illustrated, non-limiting embodiments, the dehumidification system is arranged downstream from the second heat exchanger 36 relative to a flow of medium and includes a condenser 52 and a water collector 54 arranged in series. The water collector 54 is a mechanical device operable to remove water from a medium. It should be understood that the disclosed configuration of the dehumidification system is intended as an example only, and embodiments including one or more additional components are also within the scope of the disclosure.

The elements of the ACS 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the system can be regulated to a desired value. For instance, a first valve V1 may be operable to control a flow of first medium A1 drawn from the first inlet 22 and provided to the ACS 20. Similarly, a second valve V2 may be operable to allow a portion of a medium within the air conditioning system 20 to bypass the turbine 44. In an embodiment, a controller, illustrated schematically at 56, is operably coupled to the valves of the air conditioning system 20, to selectively control operation of the ACS 20, and the flow path of one or more mediums there through, such as based on a flight condition of the aircraft of a mode of the ACS 20 for example.

Three distinct types of air conditioning systems 20 are illustrated in FIGS. 1-3. In the example of FIG. 1, the ACS 20 is a "Less Bleed" system that extracts energy from at least one of a first medium and a second medium to power the compressor to condition at least one of the first medium and the second medium for delivery to a pressurized volume 24, such as the cabin. The system of FIG. 1, which is not according to the claimed invention, is further configured to receive a third medium A3. The third medium A3 is also a pressurized medium, such as cabin outflow air leaving the pressurized volume 24, and which would typically be exhausted or dumped overboard. The ACS 20 is configured to extract work from the third medium A3. In this manner, the third medium A3 can be utilized by the ACS 20 in place of, or in addition to the first medium A1, to achieve certain operations at different altitudes. In existing "Less Bleed" systems, the amount of flow of third medium or cabin outflow air A3 provided to the power turbine 50 is determined by the difference between the amount of conditioned medium provided to the pressurized volume 24 from the ACS and what is used by the cabin pressure control system (to be described in more detail below), as well as the amount of flow that is lost as a result of leakage or inefficiencies of the aircraft.. Accordingly, the cabin outflow air provided to the ACS 20 is not controlled based on the pressure of the aircraft cabin.

With reference now to FIG. 2, an example of an a "More Electric" ACS 20 is illustrated. In addition to the previously described components, a "More Electric" ACS 20 includes an electric compressor 60 separate from the compressing device 40. The electric compressor 60 uses electric power, for example provided by a motor 61 coupled to the electric compressor 60, to initially compress the first medium A1, such as outside air for example, provided thereto. As shown, in existing "More Electric" systems, only a single medium A1 is provided to the ACS 20 and is conditioned for delivery to a downstream pressurized volume 24.

Yet another type of air conditioning system 20 is a "Low Pressure Bleed" system, an example of which is illustrated in FIG. 3. A "Low Pressure Bleed" ACS 20 is configured to receive a medium having a much lower pressure than other bleed air driven systems. In an embodiment, a "Low Pressure Bleed" ACS 20 receives a first medium A1, such as bleed air for example, having a pressure of about 15 psig as compared to other systems which receive a medium having a pressure of about 30 psig. This reduced pressure air may be achieved by drawing air from a low pressure spool of the compressor, or from a reduced pressure portion of the high pressure spool of the compressor of an aircraft engine. Similar to the "More Electric" ACS 20, an existing "Low Pressure Bleed" ACS 20 receives and conditions a single medium A1 for delivery to a downstream pressurized volume 24. It should be understood that the three specific configurations of an air conditioning system 20 illustrated and described herein are intended as an example only and that an ACS 20 having another suitable configuration is also within the scope of the disclosure.

Existing aircraft include not only the ACS 20, but also a separate cabin pressure control system (CPCS) operable to maintain the pressure within the cabin of the aircraft. In accordance with an embodiment of the disclosure, to enhance the operational efficiency of the aircraft, the CPCS of the aircraft has been eliminated and the functionality of the CPCS has been integrated into the air conditioning system 20. More specifically, the ACS 20 may be adapted to monitor the pressure within the cabin, and as a result, control the amount of cabin outflow air provided to the ACS 20 to meet the pressure demands of the cabin, for example to maintain a minimum pressure within the cabin.

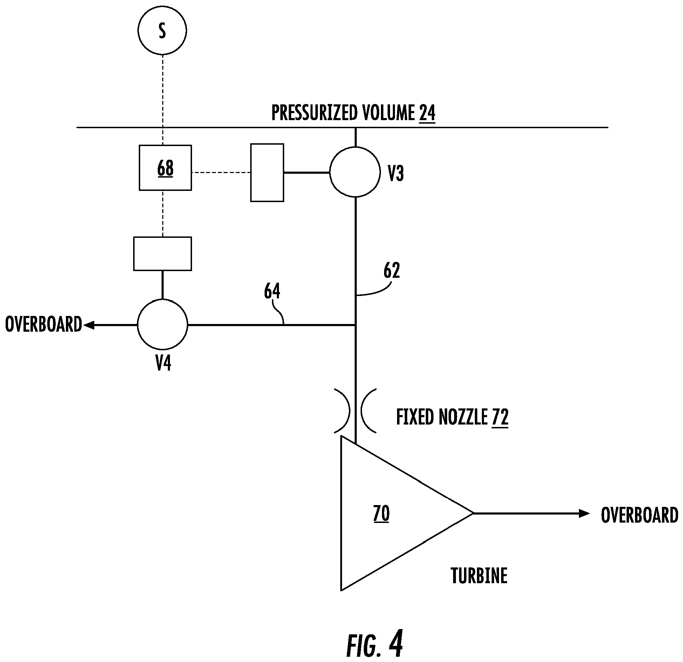

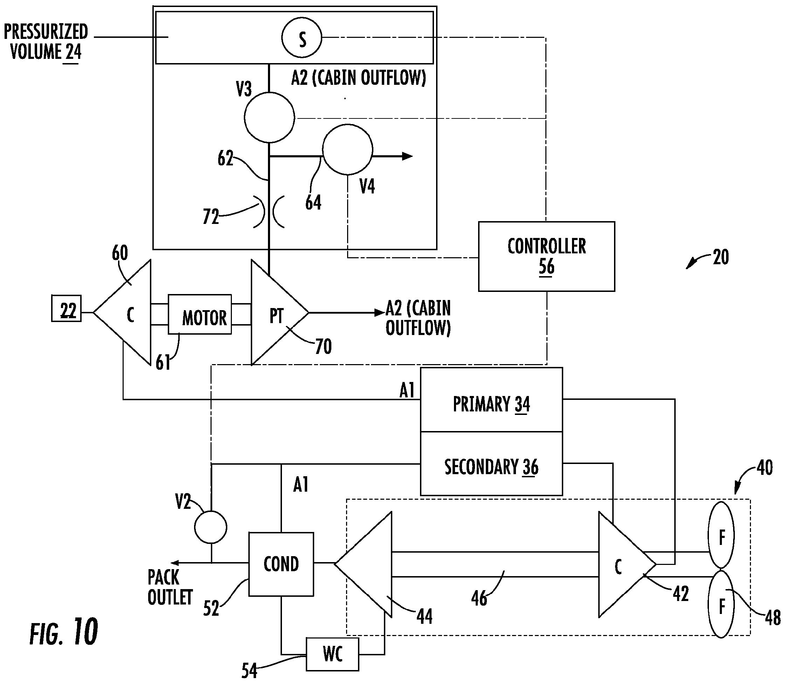

With reference now to FIGS. 4-11, air from a pressurized volume 24, such as the cabin, that would be otherwise exhausted overboard (for example cabin outflow air) is instead provided to the ACS 20 where all or a portion of the cabin outflow air is used. In the illustrated, non-limiting embodiments, the cabin outflow air is used to provide power to a compressor that receives either outside air or a low pressure bleed air from a bleed source. For example, the power may be used to power the compressor 42 of the compressing device 40, or in the "More Electric" ACS 20, the power may be provided to the electric compressor 60, separate from the compressing device 40 (see FIG. 10).

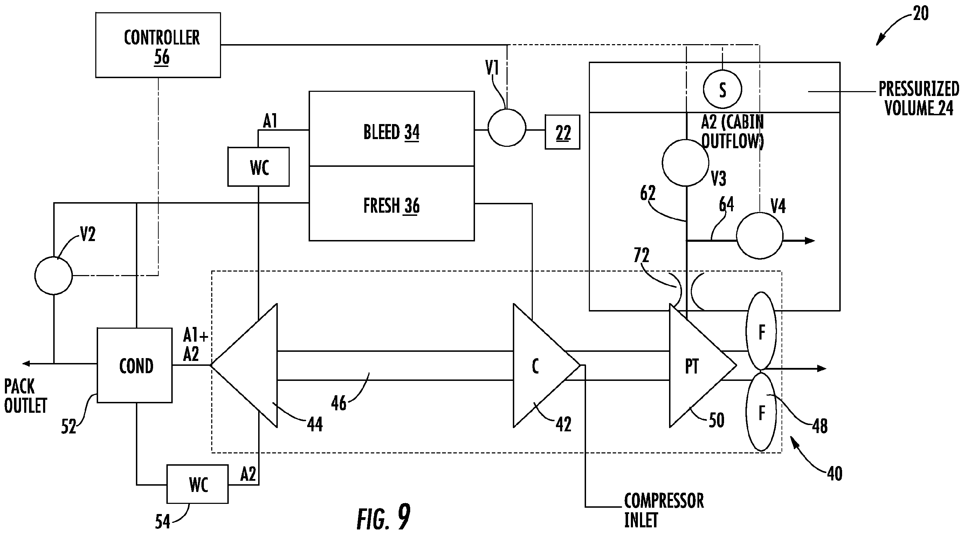

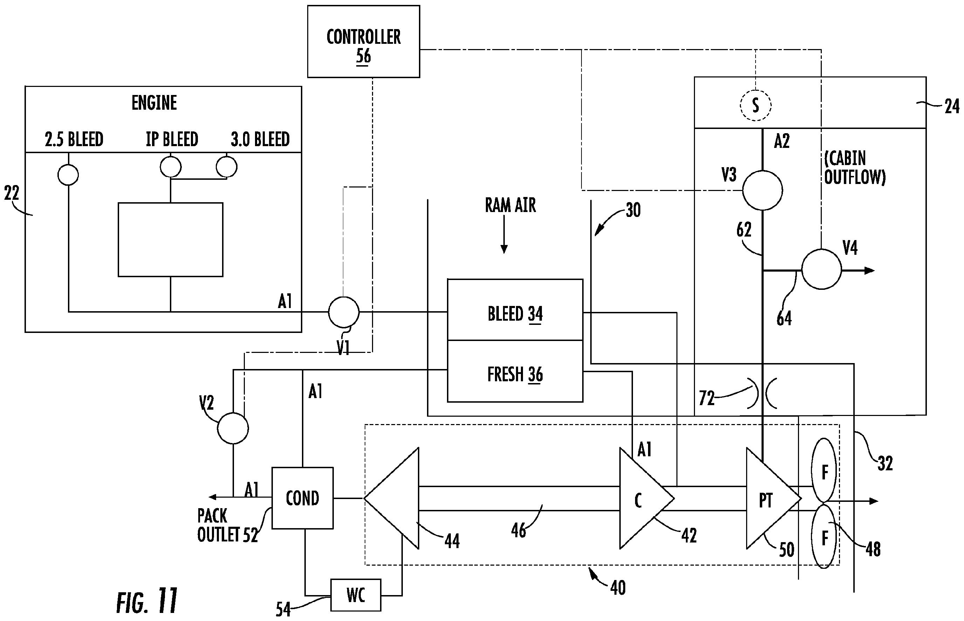

With specific reference now to FIG. 4-8, a simplified schematic of the interface between the pressurized volume 24 and a portion of an ACS 20 is illustrated in more detail. In an embodiment, a turbine 70 is arranged in fluid communication with the pressurized volume 24. The turbine 70 shown in FIGS. 4-8 may represent the turbine 44 of the compressing device 40, a power turbine 50 of the compressing device 40 (as shown in FIGS. 9 and 11), or alternatively in embodiments including an electric compressor 60 separate from the compressing device 40, a turbine operably coupled to the electric compressor 60 (see FIG. 10).

A primary flow path 62 extends between the pressurized volume 24, such as the cabin for example, and the turbine 70. A valve V3 is disposed along the primary flow path 62 and is operable to control a flow from the pressurized volume 24 to the air conditioning system 20. In an embodiment, valve V3 is a shut off valve, operable to control the flow of the cabin outflow air to the ACS 20. A secondary flow path 64 including a valve V4 is arranged in fluid communication with the primary flow path 62, at a position between the valve V3 and the turbine 70, such that the cabin outflow air can be provided to the valve V4 and the turbine 70 in parallel. As shown, Valve V4 is operable to control a pressure upstream, within the pressurized volume 24, and therefore can be adjusted to maintain a necessary pressure.

Valve V4 may be any suitable type of valve adjustable between a first position and a second position to control a flow of fluid there through. In an embodiment, the valve V4 is a thrust recovery outflow valve that uses the air provided thereto to create thrust. An example of a thrust recovery outflow valve, such as typically used in existing CPCS, is described in U.S. Patent 9,573,690 issued on February 21, 2017.

The valves V3 and V4 that fluidly connect the pressurized volume 24 to the ACS 20 may be selectively controlled based on the pressure within the pressurized volume 24 to deliver cabin outflow air to the cabin air conditioning system 20. In an embodiment, the pressure within the pressurized volume 24 is measured via a sensor, such as a pressure sensor for example, illustrated schematically at S. The sensor S may be arranged in communication with a controller of the air conditioning system 20, illustrated schematically at 56. As shown, the controller 68 is operably coupled to the valves V3 and V4, and is configured to control a position or operation of valves V3 and V4 based on at least one of an operational mode of the ACS 20 and the pressure within the pressurized volume 24 detected by the sensor S.

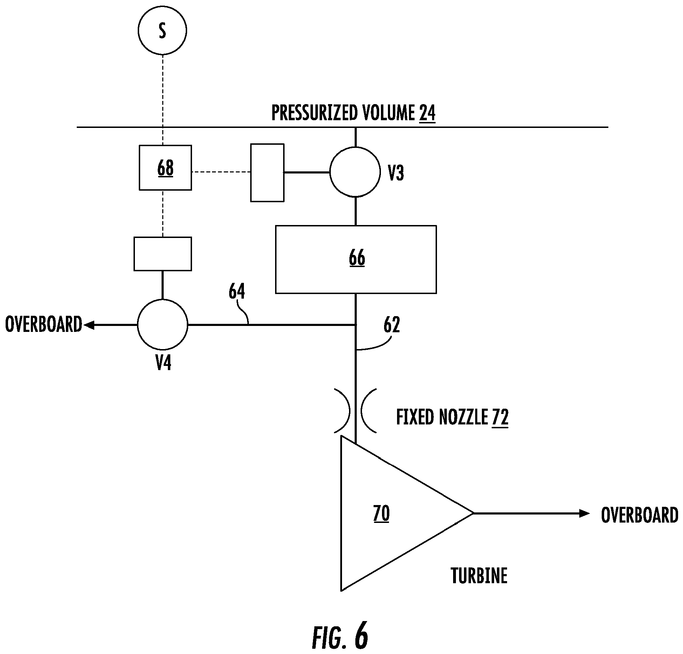

Further, the turbine 70 generally includes a nozzle, illustrated schematically at 72, configured to accelerate a medium provided thereto for entry into a turbine impeller (not shown). In some embodiments, best shown in FIGS. 4 and 6, a diameter of the nozzle of the turbine 70 is fixed such that an area of the opening for delivering a medium to the turbine 70 is constant. In an embodiment, the size of the fixed nozzle 72 is selected based on the operational requirements during a high altitude cruise of the aircraft.

With reference now to FIG. 4, in embodiments where the pressure within the pressurized volume or cabin 24 is equal to the pressure needed to drive the flow of cabin outflow air provided from the pressurized volume 24 through the turbine 70 of the ACS 20, valve V3 is fully open, and valve V4 is closed. As a result, all of the cabin outflow air available from the pressurized volume 24 is provided to the turbine 70 and energy is extracted therefrom. In embodiments where the pressure within the pressurized volume 24 is insufficient to drive the available cabin outflow air through the turbine 70, valve V3 may be open and valve V4 is adjusted to maintain a necessary pressure within the cabin. However, in other embodiments where the pressure within the pressurized volume 24 is insufficient to drive the available cabin outflow air through the turbine 70, valve V4 may be open and valve V3 may be adjusted to maintain a necessary pressure within the cabin. Instances where the pressure within the pressurized volume 24 is insufficient to drive the available cabin outflow air through the turbine 70 include when the aircraft is on the ground. Further, in embodiments where the pressure within the pressurized volume 24 exceeds the pressure required to drive the available cabin outflow air through the turbine 70, such as during single pack operation for example, valve V3 is adjusted to control the pressure within the pressurized volume 24, and valve V4 is closed.

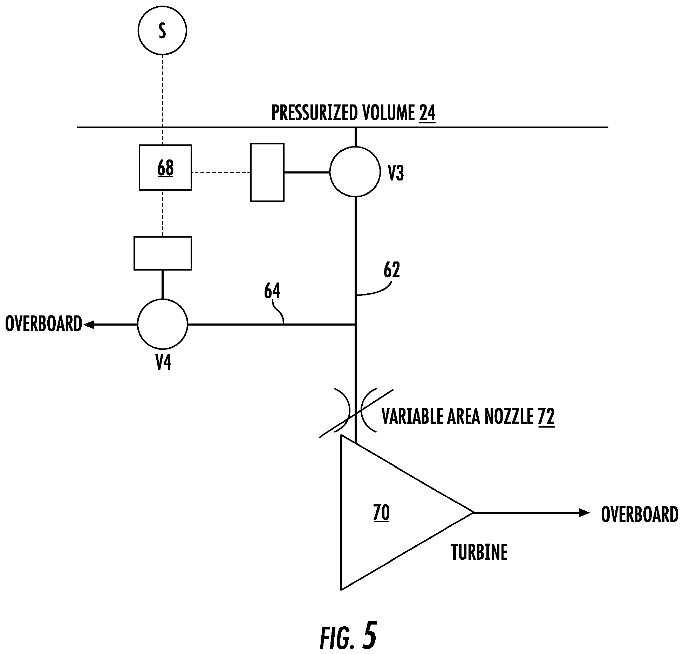

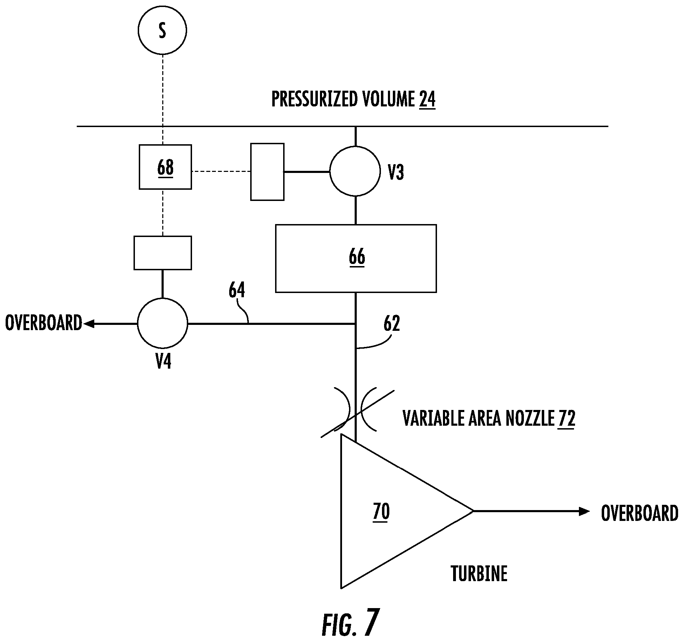

With reference now to FIGS. 5 and 7, in other embodiments of the ACS 20, the diameter of the nozzle 72 of the turbine 70 is variable. As a result, the area of the opening for delivering a medium, such as cabin outflow air for example, to the turbine 70 may be adjusted based on the pressure of the cabin outflow air provided to the ACS 20. By adjusting the area, the capacity of the turbine 70 can be adapted to closely mirror the available flow of cabin outflow air output from the pressurized volume 24, thereby minimizing waste. In an embodiment, the maximum size of the variable area nozzle 72 is selected based on the operational requirements during a high altitude cruise of the aircraft.

When possible, all of the available cabin outflow air will be provided from the pressurized volume 24 through the turbine 70 of the ACS 20. In such instances, the area of the nozzle 72 is adjusted as necessary to maintain the requisite pressure within the pressurized volume 24 and all of the cabin outflow air is provided to the turbine 70. Accordingly, when all available cabin outflow air is provided to the turbine 70, valve V3 is fully open, and valve V4 is either closed or set to a desired position. In embodiments where the pressure within the pressurized volume 24 is insufficient to drive the available cabin outflow air through the turbine 70, the variable area nozzle 72 of the turbine 70 will be fully open. In addition, valve V3 is open and valve V4 is modulated to control the pressure within the pressurized volume 24. Further, in embodiments where the pressure within the pressurized volume 24 exceeds the pressure required to drive all of the available cabin outflow air through the power turbine 50, such as during single pack operation for example, the opening of the variable area nozzle 72 is minimized, valve V4 is closed, and valve V3 is adjusted to control the pressure within the cabin.

In addition, the cabin outflow air may be used to provide cooling within a heat exchanger 66 of the ACS 20. As best shown in FIGS. 6 and 7, at least one heat exchanger 66 may be disposed along the primary flow path 62 of the cabin outflow air, generally downstream from the valve V3 and upstream from the turbine 70. Although the heat exchanger 66 is illustrated as being located upstream from the secondary flow path 64, embodiments where the heat exchanger 66 is arranged along the primary flow path 62 at a position downstream from the second flow path 64, or alternatively, along the secondary flow path 64 are also contemplated herein. The cabin outflow air may be configured to absorb heat from either the first medium A1 or the second medium A2 within the ACS 20. In embodiments where the cabin outflow air is provided to the turbine 70, adding heat to the cabin outflow air, increases the energy that can be extracted therefrom. Further, if the heat source is a pressurized medium or a medium output from the compressing device 40, the amount of ram air used by the ACS 20 can be reduced improving airplane efficiency.

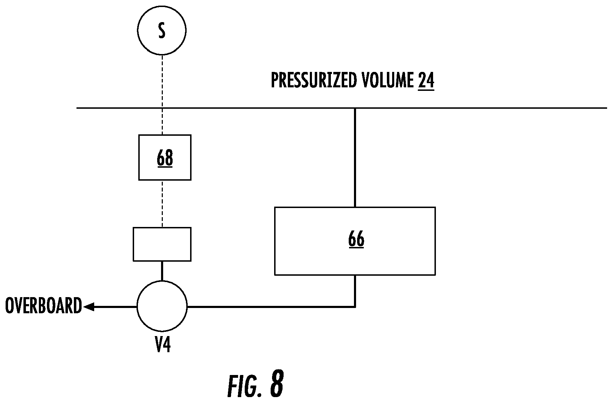

In another embodiment, not according to the claimes invention, the cabin outflow air output from heat exchanger 66 may be exhausted overboard, such as via valve V4 for example. As best shown in FIG. 8, in an embodiment, the cabin outflow air provided from the pressurized volume 24 passes through the heat exchanger 66 and then is exhausted via valve V4 in series. In such embodiments valve V4 is operable to maintain the pressure within the pressurized volume 24 and accordingly no additional valves or components, such as valve V3 for example, are necessary.

With reference now to FIGS. 9-11, a schematic diagram of a portion of the "Less Bleed" ACS, the "More Electric" ACS and the "Low Pressure Bleed" ACS (as shown in FIGS. 1-3) having the control of the cabin pressurization integrated therein are illustrated. In the Less Bleed ACS 20 shown in FIG. 9, the cabin outflow air A3 is delivered to the power turbine 50 of the compressing device 40 to extract energy therefrom. As previously described, the valve V3 and V4 are controlled to not only deliver cabin outflow air to the ACS 20, but also to maintain the pressure within the pressurized volume 24.

With reference to FIG. 10, to make use of the cabin outflow air provided from the pressurized volume 24, a turbine 70 is operably coupled to the electric compressor 60 of the "More Electric" ACS 20. The turbine 70 will extract energy from the cabin outflow air provided thereto, and the extracted energy will be used to drive the electric compressor 60. By adapting the "More Electric" ACS 20 to use a medium that would be otherwise exhausted overboard, the electrical power needed to operate the electric compressor 60 will be reduced. As shown in FIG. 11, the "Low Pressure Bleed" ACS 20 may be adapted to receive the cabin outflow air by including a power turbine 50 as part of the compressing device 40. In a "Low Pressure Bleed" system, inclusion of this additional power turbine 50 configured to receive and extract power from the cabin outflow air, reduces the pressure need of the medium drawn from the engine.

Aspects of the embodiments are described herein with reference to flowchart illustrations, schematics, and/or block diagrams of methods, apparatus, and/or systems according to embodiments. Further, the descriptions of the various embodiments have been presented for purposes of illustration, but are not intended to be exhaustive or limited to the embodiments disclosed. Many modifications and variations will be apparent to those of ordinary skill in the art without departing from the scope of the appended claims. The terminology used herein was chosen to best explain the principles of the embodiments, the practical application or technical improvement over technologies found in the marketplace, or to enable others of ordinary skill in the art to understand the embodiments disclosed herein.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

While the preferred embodiment has been described, it will be understood that those skilled in the art, both now and in the future, may make various improvements and enhancements which fall within the scope of the claims which follow. These claims should be construed to maintain the proper protection.

## Claims

1. An environmental control system for providing a conditioned medium to one or more loads of an aircraft comprising:
an air conditioning system (20) including a compressor for regulating a pressure of a first medium and a turbine (70) operably coupled to the compressor;
a pressurized volume (24) containing a second medium, the pressurized volume being arranged in fluid communication with a component of the air conditioning system; wherein the pressurized volume (24) is fluidly connected to the turbine (70) via a primary flow path (62) containing a first valve (V3) operable to control the flow of the second medium to the turbine, and wherein a secondary flow path (64) is fluidly connected to the primary flow path (62) at a position between the first valve (V3) and the turbine (70),
**characterized in that** the secondary flow path (64) includes a second valve (V4) adjustable to maintain a minimum pressure within the pressurized volume, the second medium being provided to the turbine and the second valve (V4) in parallel.

2. The environmental control system of claim 1, wherein the first medium is one of bleed air and outside air.

3. The environmental control system of claim 1 or 2, wherein source of first medium includes at least one of an engine and an auxiliary power unit of the aircraft.

4. The environmental control system of any preceding claim, wherein the second medium is cabin outflow air.

5. The environmental control system of any preceding claim, wherein the turbine (70) is a power turbine, or wherein the turbine (70) is a dual entry turbine.

6. The environmental control system of any preceding claim, wherein the turbine (70) includes a nozzle (72) configured to accelerate a flow or medium into the turbine, wherein a diameter of an opening defined by the nozzle is fixed.

7. The environmental control system of any preceding claim, wherein the turbine (70) includes a nozzle (72) configured to accelerate a flow or medium into the turbine, wherein a diameter of an opening defined by the nozzle is variable, and optionally wherein the diameter of the nozzle is varied in response to the pressure of the second medium.

8. The environmental control system of any preceding claim, wherein the second valve is operable to exhaust a portion of the second medium outside the aircraft, and the first valve (V3) and the second valve (V4) are independently operable.

9. The environmental control system of claim 8, wherein the first valve and the second valve are independently operable, and/or further comprising a ram air circuit including a ram air duct having at least one heat exchanger positioned therein.

10. The environmental control system of any preceding claim, further comprising a heat exchanger arranged in fluid communication with the second medium, and optionally wherein the heat exchanger is arranged upstream from the turbine relative to a flow of the second medium.

11. A method of operating an environmental control system of an aircraft comprising:
providing a first medium to an air conditioning system (20) including a compressor and a turbine operably coupled to the compressor;
providing a second medium to the air conditioning system from a pressurized volume;
controlling a flow of the second medium provided to the air conditioning system to maintain a minimum pressure within the pressurized volume; and
conditioning the first medium for delivery to one or more loads of the aircraft;
wherein the controlling the flow of the second medium provided to the air conditioning system to maintain a minimum pressure within the pressurized volume comprises:
controlling the flow of the second medium to the turbine via a primary flow path (62) containing a first valve (V3), the primary flow path (62) fluidly connecting the pressurized volume (24) to the turbine (70), **characterized in that** the method further comprises
controlling a pressure within the pressurized volume by a secondary flow path (64) including a second valve (V4), the secondary flow path (64) being fluidly connected to the primary flow path (62) at a position between the first valve (V3) and the turbine (70), and
wherein the second medium is provided to the turbine and the second valve (V4) in parallel.

12. The method of claim 11, further comprising extracting energy from the second medium via the turbine, wherein the energy is used to compress the first medium.

13. The method of claim 11 or 12, wherein controlling the flow of the second medium to the air conditioning system to maintain the minimum pressure includes controlling the flow of the second medium exhausted from the environmental control system to outside the aircraft.

14. The method of any of claims 11 to 13, further comprising cooling the first medium by arranging the first medium and the second medium in a heat transfer relationship, and/or wherein the first medium is one of bleed air and outside air and the second medium is cabin outflow air.

## Patentansprüche

1. Umgebungsregelsystem zum Bereitstellen eines konditionierten Mediums für eine oder mehrere Lasten eines Luftfahrzeuges, Folgendes umfassend:
eine Klimaanlage (20), die einen Kompressor zum Regulieren eines Drucks eines ersten Mediums und eine betriebsmäßig mit dem Kompressor gekoppelte Turbine (70) umfasst;
ein unter Druck stehendes Volumen (24), das ein zweites Medium enthält, wobei das unter Druck stehende Volumen in Fluidverbindung mit einer Komponente der Klimaanlage steht;
wobei das unter Druck stehende Volumen (24) mit der Turbine (70) über einen primären Flusspfad (62) in Fluidverbindung steht, der ein erstes Ventil (V3) enthält, das betreibbar ist, um den Fluss des zweiten Mediums zu der Turbine zu regeln, und wobei ein sekundärer Flusspfad (64) an einer Position zwischen dem ersten Ventil (V3) und der Turbine (70) mit dem primären Flusspfad (62) in Fluidverbindung steht, **dadurch gekennzeichnet, dass** der sekundäre Flusspfad (64) ein zweites Ventil (V4) beinhaltet, das einstellbar ist, um einen Mindestdruck innerhalb des unter Druck stehenden Volumens aufrechtzuerhalten, wobei das zweite Medium der Turbine und dem zweiten Ventil (V4) parallel bereitgestellt wird.

2. Umgebungsregelsystem nach Anspruch 1, wobei das erste Medium eines von Zapfluft oder Außenluft ist.

3. Umgebungsregelsystem nach Anspruch 1 oder 2, wobei die Quelle des ersten Mediums mindestens eines von einem Triebwerk und einer Hilfsantriebseinheit des Luftfahrzeuges beinhaltet.

4. Umgebungsregelsystem nach einem der vorhergehenden Ansprüche, wobei das zweite Medium Kabinenausströmluft ist.

5. Umgebungsregelsystem nach einem der vorhergehenden Ansprüche, wobei die Turbine (70) eine Leistungsturbine ist oder wobei die Turbine (70) eine Doppeleintrittsturbine ist.

6. Umgebungsregelsystem nach einem der vorhergehenden Ansprüche, wobei die Turbine (70) eine Düse (72) beinhaltet, die konfiguriert ist, um einen Fluss oder ein Medium in die Turbine zu beschleunigen, wobei ein Durchmesser einer durch die Düse definierten Öffnung festgelegt ist.

7. Umgebungsregelsystem nach einem der vorhergehenden Ansprüche, wobei die Turbine (70) eine Düse (72) beinhaltet, die konfiguriert ist, um einen Fluss oder ein Medium in die Turbine zu beschleunigen, wobei ein Durchmesser einer durch die Düse definierten Öffnung variabel ist und optional wobei der Durchmesser der Düse als Antwort auf den Druck des zweiten Mediums variiert wird.

8. Umgebungsregelsystem nach einem der vorhergehenden Ansprüche, wobei das zweite Ventil betreibbar ist, um einen Abschnitt des zweiten Mediums außerhalb des Luftfahrzeuges abzulassen, und wobei das erste Ventil (V3) und das zweite Ventil (V4) unabhängig voneinander betreibbar sind.

9. Umgebungsregelsystem nach Anspruch 8, wobei das erste Ventil und das zweite Ventil unabhängig voneinander betreibbar sind und/oder das ferner einen Stauluftkreislauf einschließlich eines Stauluftkanals mit mindestens einem darin positionierten Wärmetauscher umfasst.

10. Umgebungsregelsystem nach einem der vorhergehenden Ansprüche, das ferner einen Wärmetauscher umfasst, der in Fluidverbindung mit dem zweiten Medium angeordnet ist, und optional wobei der Wärmetauscher stromaufwärts von der Turbine relativ zu einem Fluss des zweiten Mediums angeordnet ist.

11. Verfahren zum Betreiben eines Umgebungsregelsystems eines Luftfahrzeuges, Folgendes umfassend:
Bereitstellen eines ersten Mediums für eine Klimaanlage (20), die einen Kompressor und eine betriebsmäßig mit dem Kompressor gekoppelte Turbine umfasst;
Bereitstellen eines zweiten Mediums für die Klimaanlage aus einem unter Druck stehenden Volumen;
Regeln eines Flusses des zweiten Mediums, das der Klimaanlage bereitgestellt wird, um einen Mindestdruck innerhalb des unter Druck stehenden Volumens aufrechtzuerhalten; und
Konditionieren des ersten Mediums zum Zuführen an eine oder mehrere Lasten des Luftfahrzeuges;
wobei das Regeln des Flusses des zweiten Mediums, das der Klimaanlage bereitgestellt wird, um einen Mindestdruck innerhalb des unter Druck stehenden Volumens aufrechtzuerhalten, Folgendes umfasst:
Regeln des Flusses des zweiten Mediums zur Turbine über einen primären Flusspfad (62), der ein erstes Ventil (V3) enthält,
wobei der primäre Flusspfad (62) das unter Druck stehende Volumen (24) in Fluidverbindung mit der Turbine (70) bringt,
**dadurch gekennzeichnet, dass** das Verfahren ferner Folgendes umfasst:
Regeln eines Drucks innerhalb des unter Druck stehenden Volumens durch einen sekundären Flusspfad (64), der ein zweites Ventil (V4) beinhaltet, wobei der sekundäre Flusspfad (64) an einer Position zwischen dem ersten Ventil (V3) und der Turbine (70) in Fluidverbindung mit dem primären Strömungsweg (62) steht, und
wobei das zweite Medium der Turbine und dem zweiten Ventil (V4) parallel bereitgestellt wird.

12. Verfahren nach Anspruch 11, das ferner das Entnehmen von Energie aus dem zweiten Medium über die Turbine umfasst, wobei die Energie zum Komprimieren des ersten Mediums verwendet wird.

13. Verfahren nach Anspruch 11 oder 12, wobei das Regeln des Flusses des zweiten Mediums zu der Klimaanlage zum Aufrechterhalten des Mindestdrucks das Regeln des Flusses des vom Umgebungsregelsystem ausgestoßenen zweiten Mediums nach außerhalb des Luftfahrzeuges beinhaltet.

14. Verfahren nach einem der Ansprüche 11 bis 13, das ferner das Kühlen des ersten Mediums durch Anordnen des ersten Mediums und des zweiten Mediums in einer Wärmeübertragungsbeziehung umfasst und/oder wobei das erste Medium eines von Zapfluft und Außenluft ist und das zweite Medium Kabinenausströmluft ist.

## Revendications

1. Système de climatisation destiné à fournir un milieu conditionné à une ou plusieurs charges d'un aéronef comprenant :
un système de conditionnement d'air (20) comportant un compresseur destiné à la régulation d'une pression d'un premier milieu et une turbine (70) fonctionnellement couplée au compresseur ;
un volume sous pression (24) contenant un second milieu, le volume sous pression étant agencé en communication fluidique avec un composant du système de conditionnement d'air ; dans lequel le volume sous pression (24) est relié de manière fluidique à la turbine (70) par l'intermédiaire d'un chemin d'écoulement primaire (62) contenant une première vanne (V3) pouvant fonctionner pour réguler l'écoulement du second milieu vers la turbine, et dans lequel un chemin d'écoulement secondaire (64) est relié de manière fluidique au chemin d'écoulement primaire (62) au niveau d'une position entre la première vanne (V3) et la turbine (70), **caractérisé en ce que** le chemin d'écoulement secondaire (64) comporte une seconde vanne (V4) réglable pour maintenir une pression minimale à l'intérieur du volume sous pression, le second milieu étant fourni à la turbine et à la seconde vanne (V4) en parallèle.

2. Système de climatisation selon la revendication 1, dans lequel le premier milieu est l'un d'un air de prélèvement et d'un air extérieur.

3. Système de climatisation selon la revendication 1 ou 2, dans lequel la source du premier milieu comporte au moins l'un d'un moteur et d'une unité de puissance auxiliaire de l'aéronef.

4. Système de climatisation selon une quelconque revendication précédente, dans lequel le second milieu est de l'air sortant de cabine.

5. Système de climatisation selon une quelconque revendication précédente, dans lequel la turbine (70) est une turbine de puissance, ou dans lequel la turbine (70) est une turbine à double entrée.

6. Système de climatisation selon une quelconque revendication précédente, dans lequel la turbine (70) comporte une buse (72) conçue pour accélérer un flux ou un milieu dans la turbine, dans lequel un diamètre d'une ouverture définie par la buse est fixe.

7. Système de climatisation selon une quelconque revendication précédente, dans lequel la turbine (70) comporte une buse (72) conçue pour accélérer un flux ou un milieu dans la turbine, dans lequel le diamètre d'une ouverture définie par la buse est variable, et éventuellement dans lequel le diamètre de la buse varie en réponse à la pression du second milieu.

8. Système de climatisation selon une quelconque revendication précédente, dans lequel la seconde vanne peut fonctionner pour évacuer une partie du second milieu à l'extérieur de l'aéronef, et la première vanne (V3) et la seconde vanne (V4) peuvent fonctionner indépendamment.

9. Système de climatisation selon la revendication 8, dans lequel la première vanne et la seconde vanne fonctionner indépendamment et/ou comprenant en outre un circuit d'air dynamique comportant un conduit d'air dynamique où au moins un échangeur de chaleur est positionné.

10. Système de climatisation selon une quelconque revendication précédente, comprenant en outre un échangeur de chaleur agencé en communication fluidique avec le second milieu, et éventuellement dans lequel l'échangeur de chaleur est agencé en amont de la turbine par rapport à un écoulement du second milieu.

11. Procédé de fonctionnement d'un système de régulation environnementale d'un aéronef comprenant :
la fourniture d'un premier milieu à un système de climatisation (20) comportant un compresseur et une turbine couplée de manière fonctionnelle au compresseur ;
la fourniture d'un second milieu au système de climatisation à partir d'un volume sous pression ;
la régulation d'un flux du second milieu fourni au système de climatisation pour maintenir une pression minimale à l'intérieur du volume sous pression ; et
le conditionnement du premier support pour une livraison à une ou plusieurs charges de l'aéronef ;
dans lequel la régulation du flux du second milieu fourni au système de climatisation pour maintenir une pression minimale à l'intérieur du volume sous pression comprend :
la régulation de l'écoulement du second fluide vers la turbine par l'intermédiaire d'un chemin d'écoulement primaire (62) contenant une première vanne (V3), le chemin d'écoulement primaire (62) reliant de manière fluidique le volume sous pression (24) à la turbine (70), caractérisé en que le procédé comprend en outre
la régulation d'une pression à l'intérieur du volume sous pression par un chemin d'écoulement secondaire (64) comportant une seconde vanne (V4), le chemin d'écoulement secondaire (64) étant relié de manière fluidique au chemin d'écoulement primaire (62) au niveau d'un emplacement entre la première vanne (V3) et la turbine (70), et
dans lequel le second milieu est fourni à la turbine et à la seconde vanne (V4) en parallèle.

12. Procédé selon la revendication 11, comprenant en outre l'extraction d'énergie du second milieu par l'intermédiaire de la turbine, dans lequel l'énergie est utilisée pour comprimer le premier milieu.

13. Procédé selon la revendication 11 ou 12, dans lequel la régulation de l'écoulement du deuxième milieu vers le système de climatisation pour maintenir la pression minimale comporte la régulation de l'écoulement du second milieu évacué du système de climatisation vers l'extérieur de l'aéronef.

14. Procédé selon l'une quelconque des revendications 11 à 13, comprenant en outre le refroidissement du premier milieu en disposant le premier milieu et le second milieu dans une relation de transfert de chaleur, et/ou dans lequel le premier milieu est l'un d'un air de prélèvement et d'un air extérieur et le second milieu est de l'air sortant de cabine.
